(19) Europäisches Patentamt
European Patent Office
Office européen des brevets

(11) **EP 3 486 302 A1**

(12) **EUROPEAN PATENT APPLICATION**
published in accordance with Art. 153(4) EPC

(43) Date of publication:
**22.05.2019 Bulletin 2019/21**

(51) Int Cl.:
*C10M 171/02* (2006.01)    *C10M 169/04* (2006.01)
*F16C 33/66* (2006.01)    *C10M 101/02* (2006.01)
*C10M 145/14* (2006.01)    *C10N 20/00* (2006.01)
*C10N 20/02* (2006.01)    *C10N 20/04* (2006.01)
*C10N 30/02* (2006.01)    *C10N 40/02* (2006.01)
*C10N 40/04* (2006.01)    *C10N 40/06* (2006.01)
*C10N 40/08* (2006.01)    *C10N 40/12* (2006.01)
*C10N 40/22* (2006.01)    *C10N 40/25* (2006.01)
*C10N 40/30* (2006.01)

(21) Application number: 17888008.4

(22) Date of filing: 17.11.2017

(86) International application number:
**PCT/JP2017/041475**

(87) International publication number:
**WO 2018/123341 (05.07.2018 Gazette 2018/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **27.12.2016 JP 2016253460**

(71) Applicant: **Idemitsu Kosan Co., Ltd Tokyo 100-8321 (JP)**

(72) Inventors:
• **SAKANOUE, Shuichi**
  **Ichihara-shi**
  **Chiba 299-0107 (JP)**
• **HAMACHI, Tatsuya**
  **Ichihara-shi**
  **Chiba 299-0107 (JP)**

(74) Representative: **Vossius & Partner Patentanwälte Rechtsanwälte mbB Siebertstrasse 3 81675 München (DE)**

(54) **LUBRICATING OIL COMPOSITION, METHOD FOR MANUFACTURING LUBRICATING OIL COMPOSITION, AND DRIVE SYSTEM APPARATUS**

(57)    To provide a lubricating oil composition having excellent viscosity characteristics and a property of difficulty in evaporation, which contains a base oil having a kinematic viscosity at 40°C of 4.0 $mm^2$/s or more and less than 6.0 $mm^2$/s, a kinematic viscosity at 100°C of 1.0 $mm^2$/s or more and less than 2.0 $mm^2$/s and a flash point of 140°C or more, and a viscosity index improver, and has a Brookfield viscosity at -40°C of 750 mPa·s or less, a kinematic viscosity at 60°C of 5.5 $mm^2$/s or more, and a NOACK value at 145°C for 1 hour of 10% by mass or less.

EP 3 486 302 A1

**Description**

Technical Field

The present invention relates to a lubricating oil composition, a method for producing a lubricating oil composition, and a drive system apparatus.

Background Art

In recent years, a lubricating oil composition used in various applications such as a drive system apparatus, such as a shock absorber, a transmission, and a power steering, an engine, and a hydraulic system has been required to have characteristics according to the applications. The characteristics of the lubricating oil composition are significantly influenced by the properties of the base oil used, the kind of the additive, and the like in many cases, and developments of the base oil and the additive have been widely performed for producing a lubricating oil composition capable of exhibiting the required characteristics.

For example, a shock absorber is an equipment that is used as a drive system apparatus for an automobile, such as a four-wheel vehicle and a two-wheel vehicle, and is also used in a wide range of fields including an earthquake resistant mechanism of housing. The lubricating oil composition used in a shock absorber is charged in the shock absorber, and required to have a capability of forming a fluid resistance in movement of a piston, so as to attenuate vibration transmitted from the road surface to the vehicle body for the automobile shock absorber and vibration caused by earthquake or the like for the housing shock absorber, and also to have a capability of lubricating the sliding portion in the shock absorber. PTL 1 describes an oil composition for a shock absorber that uses a hydrogenated modified mineral oil or a synthetic oil as a base oil, in which a particular amount of a viscosity index improver, such as a high molecular weight poly(meth)acrylate, is used.

As a base oil used for a lubricating oil composition for a drive system apparatus, such as a transmission and a power steering, a hydrocarbon-based lubricant base oil having a flash point of 170°C or more, a kinematic viscosity at 40°C of from 9.0 to 14.0 mm$^2$/s, a viscosity index of 100 or more, a 5% distillation temperature in a distillation test of 310°C or more, a pour point of -30°C or less, and an aromatic content (%$C_A$) of 0.1 or less is proposed (for example, in PTL 2). According to the description of PTL 2, it is said that the lubricant base oil has a high flash point with the conventional viscosity maintained, and thus is favorable for a lubricating oil composition used under a high temperature, such as a power steering oil and a transmission oil of an automobile.

Citation List

Patent Literatures

PTL 1: JP 2005-314609 A
PTL 2: JP 2004-182931 A

Summary of Invention

Technical Problem

Automobiles, such as four-wheel vehicles and two-wheel vehicles, are utilized around the world, and in particular, four-wheel vehicles are being widely utilized over high-temperature regions, such as Africa and Middle and Near East, and low-temperature regions, such as North America, North Europe, Russia, and the mountain areas of China. Accordingly, a lubricating oil composition used in a drive system apparatus of an automobile is being required to withstand the use thereof in an extremely wide temperature range, for example, of -40°C or more and 60°C or less.

As general characteristics of the lubricating oil composition, the viscosity is decreased at a high temperature, but it is demanded to be higher at a high temperature from the standpoint of the retainability of the oil film. Whereas as general characteristics of the lubricating oil composition, the viscosity is increased at a low temperature. But it is demanded to be lower at a low temperature since the too high viscosity causes an excessive fluid resistance, which deteriorates the ride quality of the vehicle. Thus it is demanded to have excellent viscosity characteristics capable of suppressing the temperature dependency of the viscosity (which may be hereinafter referred simply to as "excellent viscosity characteristics"). The lubricating oil composition used in a drive system apparatus is also required to have a high flash point and a property that it is difficult to evaporate.

For achieving the aforementioned viscosity characteristics, for example, it may be considered to add a viscosity index improver to a base oil having a low viscosity. However, since a base oil having a low viscosity has a property that it is relatively easy to evaporate, the lubricating oil composition may be evaporated due to frictional heat generated locally in the shock absorber, so as to cause a problem of damage of the shock absorber. The lubricating oil composition described in PTL 1 is one obtained by adding a viscosity index improver to a base oil having a kinematic viscosity at 40°C of 30 mm$^2$/s or more which is a relatively high viscosity. However, if the lubricating oil composition is used over the aforementioned extremely wide temperature range, the excellent viscosity characteristics cannot be obtained in particular at a low temperature due to the increase of the viscosity. The lubricant base oil described in PTL 2 is a base oil having a kinematic viscosity at 40°C of 9.0 mm$^2$/s or more which is a high viscosity, and therefore cannot be said to be a base oil capable of providing the excellent viscosity characteristics.

An object of the present invention is to provide a lubricating oil composition that has excellent viscosity characteristics capable of suppressing the temperature dependency of the viscosity to a low level and providing suitability for use at the areas with various temperatures, and also has a property of difficulty in evaporation, a method for producing the lubricating oil composition, and a drive system apparatus.

Solution to Problem

As a result of earnest investigation made by the present inventors, it has been found that the problem can be solved by the present invention described below. Specifically, the present invention provides a lubricating oil composition, a method for producing a lubricating oil composition, and a drive system apparatus, having the following constitutions.

1. A lubricating oil composition, containing a base oil having a kinematic viscosity at 40°C of 4.0 mm$^2$/s or more and less than 6.0 mm$^2$/s, a kinematic viscosity at 100°C of 1.0 mm$^2$/s or more and less than 2.0 mm$^2$/s and a flash point of 140°C or more, and a viscosity index improver; and having a Brookfield viscosity at -40°C of 750 mPa·s or less, a kinematic viscosity at 60°C of 5.5 mm$^2$/s or more, and a NOACK value at 145°C for 1 hour of 10% by mass or less.
2. A drive system apparatus including the lubricating oil composition according to the item 1.
3. A method for producing a lubricating oil composition having a Brookfield viscosity at -40°C of 750 mPa·s or less, a kinematic viscosity at 60°C of 5.5 mm$^2$/s or more, and a NOACK value at 145°C for 1 hour of 10% by mass or less, including blending a base oil having a kinematic viscosity at 40°C of 4.0 mm$^2$/s or more and less than 6.0 mm$^2$/s, a kinematic viscosity at 100°C of 1.0 mm$^2$/s or more and less than 2.0 mm$^2$/s and a flash point of 140°C or more, and a viscosity index improver.

Advantageous Effects of Invention

According to the present invention, a lubricating oil composition that has excellent viscosity characteristics and a property of difficulty in evaporation, and a drive system apparatus using the same can be provided.

Description of Embodiments

An embodiment of the present invention (which may be hereinafter referred to as a "present embodiment") will be described below. In the description herein, the numerals with "or more" or "or less" relating to the numeral ranges are numerals that can be arbitrarily combined.

[Lubricating Oil Composition]

The lubricating oil composition of the present embodiment contains a base oil having a kinematic viscosity at 40°C of 4.0 mm$^2$/s or more and less than 6.0 mm$^2$/s, a kinematic viscosity at 100°C of 1.0 mm$^2$/s or more and less than 2.0 mm$^2$/s and a flash point of 140°C or more, and a viscosity index improver, and has a Brookfield viscosity at -40°C of 750 mPa·s or less, a kinematic viscosity at 60°C of 5.5 mm$^2$/s or more, and a NOACK value at 145°C for 1 hour of 10% by mass or less.

[Base Oil]

The base oil contained in the lubricating oil composition of the present embodiment satisfies the following requirements (I) and (II). In the present embodiment, in the case where the following requirements (I) and (II) are not satisfied, the excellent viscosity characteristics and the property of difficulty in evaporation cannot be obtained. Furthermore, a fuel efficiency capability by decreasing the viscosity associated with the excellent viscosity characteristics cannot be obtained.

Requirement (I): a kinematic viscosity at 40°C of 4.0 mm$^2$/s or more and less than 6.0 mm$^2$/s, and a kinematic viscosity at 100°C of 1.0 mm$^2$/s or more and less than 2.0 mm$^2$/s

Requirement (II): a flash point of 140°C or more

In the description herein, the kinematic viscosity at 40°C, the kinematic viscosity at 60°C, the kinematic viscosity at 100°C and the viscosity index each mean a value that is measured according to JIS K2283, and the flash point means a value that is measured by Cleveland open-cup (COC) method according to JIS K2265.

In the present embodiment, the base oil may be any of a mineral oil and a synthetic oil, and a mineral oil is preferred from the standpoint of the inexpensiveness, the better viscosity characteristics, the property of difficulty in evaporation, and the fuel efficiency capability by decreasing the viscosity. In the present embodiment, the base oil may be a mixed oil containing only two or more kinds of mineral oils, only two or more kinds of synthetic oils, or at least one mineral oil and at least one synthetic oil, and mineral oils and synthetic oils contained in a mixed oil may not satisfy the requirements (I) and (II), as far as the mixed oil satisfies the requirements (I) and (II). In consideration of the easiness in preparation, it is preferred that at least a part of the mineral oils and the synthetic oils contained in the mixed oil satisfies the requirements (I) and (II).

As the general properties of a base oil, there is a tendency that the flash point is decreased when the viscosity is decreased. On the other hand, the base oil used in the lubricating oil composition of the present embodiment is such a base oil that has a high flash point, i.e., a flash point of 140°C or more, as defined by the requirement (II) while the viscosity is lowered to such an extent that the viscosity index cannot be calculated by the calculation method defined in JIS K2283, as defined by the requirement (I). Accordingly, the lubricating oil composition of the present embodiment can be a lubricating oil composition having the excellent viscosity characteristics, the high flash point, the property of difficulty in evaporation, and fuel efficiency capability by decreasing the viscosity, by using the base oil having the aforementioned properties.

The base oil used in the lubricating oil composition of the present embodiment has a relatively small difference between the kinematic viscosity at 40°C and the kinematic viscosity at 100°C as defined by the requirement (I), and thus has a low temperature dependency of the viscosity. Accordingly, the lubricating oil composition of the present embodiment has a low temperature dependency of the viscosity.

The kinematic viscosity at 40°C ($V_{40}$) of the base oil used in the lubricating oil composition of the present embodiment is 4.0 mm$^2$/s or more, and is preferably 4.2 mm$^2$/s or more, more preferably 4.3 mm$^2$/s or more, and further preferably 4.4 mm$^2$/s or more.

The upper limit of the kinematic viscosity ($V_{40}$) is less than 6.0 mm$^2$/s, and is preferably 5.8 mm$^2$/s or less, more preferably 5.7 mm$^2$/s or less, and further preferably 5.6 mm$^2$/s or less.

The kinematic viscosity at 100°C ($V_{100}$) of the base oil used in the lubricating oil composition of the present embodiment is 1.0 mm$^2$/s or more, and is preferably 1.2 mm$^2$/s or more, more preferably 1.3 mm$^2$/s or more, further preferably 1.4 mm$^2$/s or more, and still further preferably 1.5 mm$^2$/s or more.

The upper limit of the kinematic viscosity ($V_{100}$) is less than 2.0 mm$^2$/s, and is preferably 1.95 mm$^2$/s or less, more preferably 1.90 mm$^2$/s or less, and further preferably 1.85 mm$^2$/s or less.

In the case where the base oil used in the lubricating oil composition of the present embodiment is a mineral oil, the viscosity index measured according to JIS K2283 cannot be calculated.

The flash point of the base oil used in the lubricating oil composition of the present embodiment is 140°C or more, and is preferably 142°C or more, more preferably 144°C or more, further preferably 146°C or more, still further preferably 150°C or more, and particularly preferably 154°C or more, and the upper limit thereof is generally 180°C or less.

The aniline point of the base oil used in the lubricating oil composition of the present embodiment is preferably 70°C or more, more preferably 80°C or more, further preferably 85°C or more, and still further preferably 90°C or more, and is generally 110°C or less.

The base oil having an aniline point of 70°C or more has a tendency of containing a large amount of a paraffin component and a small amount of an aromatic component, and tends to have a high flash point.

In the description herein, the aniline point means a value that is measured according to JIS K2256 (U-tube method).

The density at 15°C of the base oil used in the lubricating oil composition of the present embodiment is preferably 0.860 g/cm$^3$ or less, more preferably 0.850 g/cm$^3$ or less, further preferably 0.840 g/cm$^3$ or less, still further preferably 0.830 g/cm$^3$ or less, and particularly preferably 0.825 g/cm$^3$ or less, and is generally 0.800 g/cm$^3$ or more.

The base oil satisfying the requirements (I) and (II) and also having a density of 0.860 g/cm$^3$ or less can be a base oil that has a further lower temperature dependency of the viscosity and a further higher flash point.

In the description herein, the density at 15°C is a value that is measured according to JIS K2249.

In the case where the base oil used in the lubricating oil composition of the present embodiment is a mineral oil, the paraffin content (%$C_P$) thereof is preferably 60 or more and 80 or less, more preferably 62 or more and 79 or less, further preferably 66 or more and 78 or less, and still further preferably 68 or more and 77 or less.

The naphthene content (%$C_N$) thereof is preferably 10 or more and 40 or less, more preferably 13 or more and 38 or less, further preferably 16 or more and 34 or less, and still further preferably 20 or more and 32 or more.

The aromatic content (%$C_A$) thereof is preferably less than 2.0, more preferably less than 1.0, and further preferably less than 0.1.

In the description herein, the paraffin content (%Cp), the naphthene content (%$C_N$), and the aromatic content (%$C_A$) respectively mean proportions (percentages) of the paraffin component, the naphthene component, and the aromatic component measured according to ASTM D-3238 ring analysis (n-d-M method).

The base oil used in the lubricating oil composition of the present embodiment preferably further satisfies the following requirement (III). The lubricating oil composition of the present embodiment may have an excellent fuel efficiency capability and a further lower temperature dependency of the viscosity by satisfying the requirement (III).

Requirement (III): a temperature gradient $\Delta|\eta^*|$ of a complex viscosity between two temperature points of -10°C and -25°C measured with a rotary rheometer under conditions of an angular velocity of 6.3 rad/s and a strain amount of from 0.1 to 100% (which may be hereinafter referred simply to as a "temperature gradient $\Delta|\eta^*|$ of complex viscosity") of 0.1 Pa·s/°C or less

In the case where the base oil used in the lubricating oil composition of the present embodiment is a mixed oil, it is preferred that the mixed oil satisfies the requirement (III).

The "strain amount" referred in the requirement (III) is a value that is appropriately determined within the range of from 0.1 to 100% according to the temperature.

The aforementioned "temperature gradient $\Delta|\eta^*|$ of complex viscosity" is a value that shows the amount of change of the complex viscosity per unit between two temperature points of -10°C and -25°C (i.e., the absolute value of the gradient) as observed when the value of the complex viscosity $\eta^*$ at -10°C and the value of the complex viscosity $\eta^*$ at -25°C are measured either independently at these temperatures or measured while continuously varying the temperature from -10°C to -25°C or from -25°C to -10°C, and the values are placed on a temperature-complex viscosity coordinate plane. More specifically, the temperature gradient $\Delta|\eta^*|$ of complex viscosity means a value that is calculated from the following calculation expression (f1).

Calculation expression (f1):

$$\text{Temperature gradient } \Delta|\eta^*| \text{ of complex viscosity} = |([\text{complex viscosity } \eta^* \text{ at -25°C}] - [\text{complex viscosity } \eta^* \text{ at -10°C}])/(-25 - (-10))|$$

Accordingly, the "temperature gradient $\Delta|\eta^*|$ of complex viscosity" defined by the requirement (III) shows the aging change by decreasing the temperature, in terms of the low-temperature characteristics of the base oil.

A mineral oil contains a wax component, and therefore when the temperature of a mineral oil is gradually decreased, the wax component in the mineral oil is deposited to form a gel-like structure. The wax components are deposited at different temperatures depending on the structures of paraffin and the like. The gel-like structure of the wax component is easily broken, and therefore the viscosity of a mineral oil varies by a mechanical action. The conventionally used parameters of the low-temperature viscosity characteristics have been provided without consideration of the deposition of wax.

On the other hand, the "temperature gradient $\Delta|\eta^*|$ of complex viscosity" defined by the requirement (III) is an index that can accurately evaluate the low-temperature viscosity characteristics of a mineral oil by taking into consideration the deposition rate of the wax component contained in the mineral oil to consider the variation in the coefficient of friction involved in the deposition of the wax component. Accordingly, it can be said that the requirement (III) is substantially a requirement that is applied to the case where a mineral oil is contained as the base oil.

The base oil that satisfies the requirement (III) has a temperature gradient $\Delta|\eta^*|$ of complex viscosity of 0.1 Pa·s/°C or less, and is regulated to prevent the deposition rate of the wax component from being increased, and therefore the base oil tends not to cause increase of the coefficient of friction, and has a lower temperature dependency of the viscosity while having a lower viscosity. Accordingly, the lubricating oil composition of the present embodiment may have an excellent fuel efficiency capability and a low temperature dependency of the viscosity, by using the base oil.

From the aforementioned standpoint, the temperature gradient $\Delta|\eta^*|$ of complex viscosity defined by the requirement (III) is preferably 0.08 Pa·s/°C or less, more preferably 0.05 Pa·s/°C or less, further preferably 0.02 Pa·s/°C or less, still further preferably 0.01 Pa·s/°C or less, still more further preferably 0.005 Pa·s/°C or less, and particularly preferably 0.0030 Pa·s/°C or less.

The lower limit of the temperature gradient $\Delta|\eta^*|$ of complex viscosity defined by the requirement (III) is not particularly limited, and is preferably 0.0001 Pa·s/°C or more, more preferably 0.0005 Pa·s/°C or more, and further preferably 0.0010 Pa·s/°C or more.

(Preparation Example of Mineral Oil)

The mineral oil that satisfies the requirements (I) and (II) and preferably satisfies the requirement (III) can be readily prepared by appropriately considering the selection of a feedstock oil as a raw material and the following factors relating to the preparation method of the mineral oil using the feedstock oil. Specifically, the base oil used in the lubricating oil composition of the present embodiment is preferably a mineral oil that is obtained by subjecting the feedstock oil shown below to the refining process shown below.
The following factors show one example of the preparation method, and the mineral oil can be prepared by taking the other factors into consideration.

[Selection of Feedstock Oil]

Examples of the feedstock oil include an atmospheric residual oil obtained by atmospheric distillation of a crude oil, such as a paraffinic mineral oil, an intermediate mineral oil, or a naphthenic mineral oil; a distillate oil obtained by vacuum distillation of the atmospheric residual oil; and a mineral oil or wax (e.g., GTL wax) obtained by subjecting the distillate oil to at least one of refining processes, such as solvent deasphalting, solvent extraction, hydrofinishing, solvent dewaxing, catalytic dewaxing, isomerization dewaxing, and vacuum distillation.
The feedstock oil may be used alone or as a combination of two or more kinds thereof.
The feedstock oil preferably contains a gas oil fraction from the standpoint of the preparation the mineral oil that has a viscosity decreased to the extent defined by the requirement (I) while showing a low temperature dependency of the viscosity, and has a high flash point defined by the requirement (II), and more preferably contains a gas oil fraction obtained by hydrocracking of a heavy gas oil.
The kinematic viscosity at 40°C of the feedstock oil is preferably $4.0 \text{ mm}^2\text{/s}$ or more and $6.0 \text{ mm}^2\text{/s}$ or less, more preferably $4.2 \text{ mm}^2\text{/s}$ or more and $5.8 \text{ mm}^2\text{/s}$ or less, and further preferably $4.4 \text{ mm}^2\text{/s}$ or more and $5.6 \text{ mm}^2\text{/s}$ or less.
The kinematic viscosity at 100°C of the feedstock oil is preferably $1.0 \text{ mm}^2\text{/s}$ or more and $2.0 \text{ mm}^2\text{/s}$ or less, more preferably $1.2 \text{ mm}^2\text{/s}$ or more and $1.9 \text{ mm}^2\text{/s}$ or less, and further preferably $1.4 \text{ mm}^2\text{/s}$ or more and $1.85 \text{ mm}^2\text{/s}$ or less.
The flash point of the feedstock oil is generally 70°C or more and less than 140°C.
The paraffin content (%Cp), the aromatic content (%CA), and the naphthene content ($\%C_N$) of the feedstock oil are preferably in the ranges described below as measured according to the ASTM D-3238 ring analysis (n-d-M method), from the standpoint of the preparation of the mineral oil that has a viscosity decreased to the extent defined by the requirement (I) while showing a low temperature dependency of the viscosity.
The paraffin content ($\%C_P$) is preferably 60 or more, more preferably 65 or more, further preferably 68 or more, and still further preferably 70 or more, and the upper limit thereof is preferably 80 or less, more preferably 79 or less, and further preferably 78 or less.
The aromatic content ($\%C_A$) is preferably 10.0 or less, more preferably 5.0 or less, further preferably 4.4 or less, and still further preferably 4.2 or less.
The naphthene content ($\%C_N$) is preferably 10 or more and 40 or less, more preferably 13 or more and 35 or less, further preferably 16 or more and 32 or less, and still further preferably 20 or more and 32 or less.
The proportions of the aromatic component, the naphthene component, the n-paraffin component, and the isoparaffin component in the feedstock oil based on 100% by volume of the total amount of the components are preferably in the ranges described below as measured according to ASTM D2786 and GC-FID method, from the standpoint of the preparation of the mineral oil that has a viscosity decreased to the extent defined by the requirement (I) while showing a low temperature dependency of the viscosity.
The "aromatic component" means a generic term of hydrocarbon compounds having an aromatic ring, and the proportion of the aromatic component is preferably 25% by volume or less, more preferably 15% by volume or less, and further preferably 10% by volume or less. The lower limit thereof is preferably 1% by volume or more, more preferably 1.5% by volume or more, and further preferably 2% by volume or more.
The "naphthene component" means a generic term of saturated cyclic hydrocarbon compounds, and the proportion of the naphthene component is preferably 70% by volume or less, more preferably 60% by volume or less, and further preferably 50% by volume or less. The lower limit thereof is preferably 10% by volume or more, more preferably 12% by volume or more, and further preferably 15% by volume or more.
The "n-paraffin component" means a generic term of saturated straight-chain hydrocarbon compounds, and the proportion of the n-paraffin component is preferably 1% by volume or more and 50% by volume or less, more preferably 4% by volume or more and 30% by volume or less, and further preferably 6% by volume or more and 15% by volume or less.

The "isoparaffin component" means a generic term of saturated branched-chain hydrocarbon compounds, and the proportion of the isoparaffin component is preferably 8% by volume or more, more preferably 25% by volume or more, and further preferably 30% by volume or more. The upper limit thereof is preferably 70% by volume or less, more preferably 68% by volume or less, and further preferably 65% by volume or less.

The 10% distillation temperature measured by the distillation test according to JIS K2249 of the feedstock oil is preferably 250°C or more, more preferably 260°C or more, further preferably 270°C or more, and still further preferably 275°C or more, and is generally 290°C or less.

The 90% distillation temperature measured by the aforementioned distillation test of the feedstock oil is preferably 320°C or more, more preferably 350°C or more, further preferably 355°C or more, still further preferably 360°C or more, and particularly preferably 366°C or more, and is generally 400°C or less.

In the case where the 10% distillation temperature and the 90% distillation temperature of the feedstock oil are in the aforementioned ranges, the base oil having a high flash point as defined by the requirement (II) can be prepared.

The mass average molecular weight (Mw) of the feedstock oil is preferably 150 or more and 450 or less, more preferably 180 or more and 400 or less, and further preferably 200 or more and 350 or less.

In the description herein, the mass average molecular weight (Mw) of the feedstock oil means a value that is measured according to ASTM D2502.

As described above, the kinematic viscosities at 40°C and 100°C of the feedstock oil do not largely differ from the ranges defined by the requirement (I).

However, the flash point of the feedstock oil having a low viscosity as described above is generally less than 140°C, which does not satisfy the requirement (II). Furthermore, the feedstock oil also tends to have a high temperature gradient $\Delta|\eta^*|$ of complex viscosity as defined by the requirement (III), and has a problem in terms of the low-temperature viscosity characteristics.

On the other hand, irrespective of the use of the feedstock oil of this type, the mineral oil used in the lubricating oil composition of the present embodiment has a high flash point and has a low viscosity while having a lowered temperature dependency of the viscosity by the subjecting the feedstock oil to the refining process as described below, and therefore is a mineral oil having excellent low-temperature viscosity characteristics.

(Method for producing Mineral Oil)

The mineral oil used in the lubricating oil composition of the present embodiment is preferably obtained by subjecting the aforementioned feedstock oil to a refining process. It is preferred that the type of the refining process and the refining conditions are appropriately set according to the type of the feedstock oil used.

The refining process preferably includes at least a hydrogenation isomerization dewaxing process, and more preferably includes a hydrogenation isomerization dewaxing process and a hydrofinishing process.

Accordingly, the mineral oil used in the lubricating oil composition of the present embodiment is preferably obtained through a hydrogenation isomerization dewaxing process, and more preferably obtained further through a hydrofinishing process after the hydrogenation isomerization dewaxing process.

The "hydrogenation isomerization dewaxing process" and the "hydrofinishing process" will be explained below.

(Hydrogenation Isomerization Dewaxing Process)

The hydrogenation isomerization dewaxing process is a refining process performed for the purpose of isomerization of a straight-chain paraffin contained in a feedstock oil to a branched-chain isoparaffin as mentioned above.

The hydrogenation isomerization dewaxing process can also conduct ring opening of an aromatic component into a paraffin component, removal of impurities, such as a sulfur component and a nitrogen component, and the like.

The hydrogenation isomerization process increases the proportion of a branched-chain isoparaffin, thereby producing a mineral oil having a low temperature dependency of the viscosity and having a high flash point.

The presence of a straight-chain paraffin in the feedstock oil is one of the factors increasing the value of the temperature gradient $\Delta|\eta^*|$ of complex viscosity defined by the requirement (III). Accordingly, it is preferred in the process that a straight-chain paraffin is isomerized to a branched-chain isoparaffin, so as to control the temperature gradient $\Delta|\eta^*|$ of complex viscosity to a low value.

In addition, the process can also reduce the pour point of the mineral oil, and therefore the mineral oil having further improved low-temperature viscosity characteristics can be obtained.

The hydrogenation isomerization dewaxing process is preferably performed in the presence of a hydrogenation isomerization dewaxing catalyst.

Examples of the hydrogenation isomerization dewaxing catalyst include catalysts containing a carrier, such as silicoaluminophosphate (SAPO) and zeolite, having carried thereon a metal oxide, such as oxides of nickel (Ni)/tungsten (W), nickel (Ni)/molybdenum (Mo), and cobalt (Co)/molybdenum (Mo), or a noble metal, such as platinum (Pt) and lead (Pd).

The hydrogen partial pressure in the hydrogenation isomerization dewaxing process is preferably 2.0 MPa or more and 25 MPa or less, more preferably 2.5 MPa or more and 22 MPa or less, further preferably 3.0 MPa or more and 10 MPa or less, and still further preferably 3.5 MPa or more and 6 MPa or less, from the standpoint of the production of the mineral oil satisfying the requirement (III).

The reaction temperature in the hydrogenation isomerization dewaxing process is preferably set to a temperature higher than the reaction temperature of the ordinary hydrogenation isomerization dewaxing process, and specifically is preferably 250°C or more and 400°C or less, more preferably 275°C or more and 380°C or less, further preferably 280°C or more and 370°C or less, and still further preferably 285°C or more and 360°C or less, from the standpoint of the production of the mineral oil satisfying the requirements (II) and (III).

The high reaction temperature can accelerate the isomerization of a straight-chain paraffin into a branched-chain isoparaffin, thereby making easy the production of the base oil satisfying the requirements (II) and (III).

The liquid hourly space velocity (LHSV) in the hydrogenation isomerization dewaxing process is preferably 5.0 hr$^{-1}$ or less, more preferably 3.0 hr$^{-1}$ or less, further preferably 2.0 hr$^{-1}$ or less, and still further preferably 1.5 hr$^{-1}$ or less, from the standpoint of the production of the base oil satisfying the requirement (III).

The LHSV in the hydrogenation isomerization dewaxing process is preferably 0.1 hr$^{-1}$ or more, and more preferably 0.2 hr$^{-1}$ or more, from the standpoint of the improvement of the productivity.

The supply proportion of hydrogen gas in the hydrogenation isomerization dewaxing process is preferably 100 Nm$^3$ or more and 1,000 Nm$^3$ or less, more preferably 200 Nm$^3$ or more and 800 Nm$^3$ or less, and further preferably 250 Nm$^3$ or more and 650 Nm$^3$ or less, per 1 kL of the feedstock oil supplied.

(Hydrofinishing Process)

The hydrofinishing process is a refining process that is performed for the purpose of complete saturation of the aromatic component contained in the feedstock oil, removal of impurities, such as a sulfur component and a nitrogen component, and the like.

The hydrofinishing process is preferably performed in the presence of a hydrogenation catalyst.

Examples of the hydrogenation catalyst include catalysts containing an amorphous carrier, such as silica/alumina and alumina, or a crystalline carrier, such as zeolite, having carried thereon a metal oxides, such as oxides of nickel (Ni)/tungsten (W), nickel (Ni)/molybdenum (Mo), and cobalt (Co)/molybdenum (Mo), or a noble metal, such as platinum (Pt) and lead (Pd).

The hydrogen partial pressure in the hydrofinishing process is preferably set to a value higher than a pressure of an ordinary hydrogenation process, and specifically is preferably 16 MPa or more, more preferably 17 MPa or more, and further preferably 18 MPa or more, and the upper limit thereof is preferably 30 MPa or less, and more preferably 22 MPa or less, from the standpoint of the production of the mineral oil satisfying the requirement (III).

The reaction temperature in the hydrofinishing process is preferably 200°C or more and 400°C or less, more preferably 250°C or more and 350°C or less, and further preferably 280°C or more and 330°C or less, from the standpoint of the production of the mineral oil satisfying the requirement (III).

The liquid hourly space velocity (LHSV) in the hydrofinishing process is preferably 5.0 hr$^{-1}$ or less, more preferably 2.0 hr$^{-1}$ or less, and further preferably 1.0 hr$^{-1}$ or less, from the standpoint of the production of the mineral oil satisfying the requirement (III), and is preferably 0.1 hr$^{-1}$ or more, more preferably 0.2 hr$^{-1}$ or more, and further preferably 0.3 hr$^{-1}$ or more, from the standpoint of the productivity.

The supply proportion of hydrogen gas in the hydrofinishing process is preferably 100 Nm$^3$ or more and 2,000 Nm$^3$ or less, more preferably 200 Nm$^3$ or more and 1,500 Nm$^3$ or less, and further preferably 250 Nm$^3$ or more and 1,100 Nm$^3$ or less, per 1 kL of the supplied oil (i.e., the produced oil after subjecting to the hydrogenation isomerization dewaxing process).

(Post-treatment)

After the completion of the aforementioned refining processes, the produced oil obtained is subjected to vacuum distillation to recover a fraction having a kinematic viscosity at 40°C in the range defined by the requirement (I), thereby providing the mineral oil used in the lubricating oil composition of the present embodiment.

The mineral oil obtained has a high flash point while having a viscosity decreased as defined by the requirement (I).

The conditions (such as the pressure, the temperature, and the time) for the vacuum distillation may be appropriately controlled, so as to provide the mineral oil that has kinematic viscosities at 40°C and 100°C in the ranges defined by the requirement (I).

(Synthetic oil)

The lubricating oil composition of the present embodiment may contain a synthetic oil as a base oil.

Examples of the synthetic oil include a poly-α-olefin, such as an α-olefin homopolymer and an α-olefin copolymer (e.g., an α-olefin copolymer having from 8 to 14 carbon atoms, such as an ethylene-α-olefin copolymer); an isoparaffin; various esters, such as a polyol ester, a dibasic acid ester (e.g., ditridecyl glutarate), a tribasic acid ester (e.g., 2-ethylhexyl trimellitate), and a phosphoric ester; various ethers, such as a polyphenyl ether; a polyalkylene glycol; and an alkylbenzene.

(Content of Base Oil)

The content of the base oil in the lubricating oil composition of the present embodiment is generally 60% by mass or more, preferably 70% by mass or more, and more preferably 80% by mass or more, based on the total amount of the composition. The upper limit thereof is generally less than 100% by mass, preferably 99% by mass or less, more preferably 98% by mass or less, and further preferably 97% by mass or less.

In the present embodiment, in the case where the base oil is a mixed oil containing a base oil that satisfies the requirements (I) and (II), and preferably satisfies the requirement (III) (which may be hereinafter referred to as a "base oil A"), and a base oil that does not satisfy the requirements (I) and (II) (which may be hereinafter referred to as a "base oil B"), the content of the base oil A is not particularly limited, as far as the base oil satisfies the requirements (I) and (II), and is preferably 20% by mass or more, more preferably 25% by mass or more, and further preferably 30% by mass or more, and it suffices that the upper limit thereof is less than 100% by mass, based on the total amount of the base oils.

The lubricating oil composition of the present embodiment may contain an additional additive in some cases, in addition to the viscosity index improver, as described later, and the additive may be supplied along with a diluent oil, which may be used as it is in some cases. In these cases, the content of the diluent oil may be determined in consideration of the aforementioned content of the base oil.

(Viscosity Index Improver)

The lubricating oil composition of the present embodiment contains a viscosity index improver. In the case where the lubricating oil composition of the present embodiment does not contain a viscosity index improver, the excellent viscosity characteristics cannot be obtained, and the fuel efficiency capability by decreasing the viscosity cannot be obtained.

Preferred examples of the viscosity index improver include polymers, for example, a polymethacrylate-based compound, such as a polymer, a copolymer, and the like of a (meth)acrylate ester, e.g., an alkyl (meth)acrylate, an olefin polymer-based compound, such as an ethylene-propylene copolymer and a polybutylene, and a styrene polymer-based compound, such as a polyalkylstyrene, a styrene-diene copolymer, and a styrene-isoprene copolymer, from the standpoint of the excellent viscosity characteristics provided, and a polymethacrylate is more preferred. In the present embodiment, the viscosity index improver may be used alone or as a combination of two or more kinds thereof.

The polymethacrylate-based viscosity index improver includes a dispersion type and a non-dispersion type. Examples of the non-dispersion type include the aforementioned polymer or copolymer of a (meth)acrylate ester, and a hydrogenated product thereof, and examples of the dispersion type include a copolymer of a (meth)acrylate ester and a polar monomer having dispersibility, such as diethylaminoethyl methacrylate. The olefin polymer-based viscosity index improver also includes a dispersion type and a non-dispersion type.

The mass average molecular weight (Mw) of the viscosity index improver is generally 5,000 or more and 1,000,000 or less, and for the polymethacrylate-based viscosity index improver, is preferably 30,000 or more, more preferably 50,000 or more, more preferably 55,000 or more, and particularly preferably 100,000 or more. The upper limit thereof is preferably 350,000 or less, more preferably 300,000 or less, and further preferably 250,000 or less. For the olefin polymer-based viscosity index improver, the mass average molecular weight (Mw) thereof is preferably 5,000 or more, more preferably 10,000 or more, and further preferably 15,000 or more, and the upper limit thereof is preferably 800,000 or less, more preferably 500,000 or less, and further preferably 40,000 or less.

In the description herein, the mass average molecular weight (Mw) is a value that is measured according to ASTM D2502.

The content of the viscosity index improver is preferably 2.5% by mass or more, more preferably 2.8% by mass or more, and further preferably 3.0% by mass or more, based on the total amount of the oil composition, from the standpoint of the excellent viscosity characteristics provided. The upper limit thereof is preferably 7.0% by mass or less, more preferably 6.8% by mass or less, and further preferably 6.5% by mass or less. The viscosity index improver may be used in the form associated with a diluent oil in some cases, and in these cases, the content of the viscosity index improver is the content of only the viscosity index improver excluding the diluent oil. The diluent oil used may be appropriately selected from the mineral oils, the synthetic oils, and the like exemplified for the use of the base oil.

[Additional Additive]

The lubricating oil composition of the present embodiment may contain depending on necessity an additive ordinarily used for a lubricating oil, as an additional additive, in such a range that does not impair the effects of the present invention.

Examples of the additive for a lubricating oil include a pour point depressant, a metal-based detergent, a dispersant, an anti-wear agent, an extreme pressure agent, an antioxidant, an anti-foaming agent, a friction modifier, a rust inhibitor, and a metal deactivator. A compound having multiple functions of the aforementioned additives (such as a compound having functions of an anti-wear agent and an extreme pressure agent) may be used. The additive for a lubricating oil may be a commercially available additive package containing plural additives. The additive may be used alone or as a combination of two or more kinds thereof.

The lubricating oil composition of the present embodiment may be formed of the base oil and the viscosity index improver, or may be formed of the base oil, the viscosity index improver, and the additional additive.

The contents of the additives may be appropriately controlled depending on the kind of the additive within a range that does not impair the effects of the present invention. In the case where the additive is contained, the amount thereof is generally 0.01% by mass or more and 15% by mass or less, and is preferably 0.05% by mass or more, more preferably 0.1% by mass or more, and further preferably 0.3% by mass or more, and the upper limit thereof is preferably 10% by mass or less, more preferably 8% by mass or less, and further preferably 6% by mass or less.

[Properties of Lubricating Oil Composition]

The kinematic viscosity at 60°C ($V_{60}$) of the lubricating oil composition of the present embodiment is necessarily 5.5 $mm^2$/s or more. In the case where the kinematic viscosity at 60°C ($V_{60}$) is less than 5.5 $mm^2$/s, in particular, the retainability of the oil film cannot be obtained, and the composition cannot be a lubricating oil composition having the excellent viscosity characteristics. The kinematic viscosity at 60°C ($V_{60}$) is preferably 5.8 $mm^2$/s or more, more preferably 6.0 $mm^2$/s or more, and further preferably 6.5 $mm^2$/s or more, from the standpoint of the excellent viscosity characteristics provided. The upper limit thereof is preferably 12.0 $mm^2$/s or less, more preferably 11.0 $mm^2$/s or less, and further preferably 10.0 $mm^2$/s or less.

The kinematic viscosity at 40°C ($V_{40}$) of the lubricating oil composition of the present embodiment is preferably 7.5 $mm^2$/s or more, more preferably 8.0 $mm^2$/s or more, and further preferably 8.5 $mm^2$/s or more, from the standpoint of the further excellent viscosity characteristics provided. The upper limit thereof is preferably 13.0 $mm^2$/s or less, more preferably 12.0 $mm^2$/s or less, and further preferably 11.5 $mm^2$/s or less.

The kinematic viscosity at 100°C ($V_{100}$) of the lubricating oil composition of the present embodiment is preferably 2.5 $mm^2$/s or more, more preferably 3.0 $mm^2$/s or more, and further preferably 3.5 $mm^2$/s or more, from the standpoint of the further excellent viscosity characteristics provided. The upper limit thereof is preferably 5.5 $mm^2$/s or less, more preferably 5.0 $mm^2$/s or less, and further preferably 4.5 $mm^2$/s or less.

The viscosity index of the lubricating oil composition of the present embodiment is preferably 280 or more, more preferably 300 or more, and further preferably 320 or more, from the standpoint of the further excellent viscosity characteristics provided. The upper limit thereof is preferably 450 or less, more preferably 440 or less, and further preferably 430 or less.

The Brookfield viscosity at -40°C of the lubricating oil composition of the present embodiment is necessarily 750 mPa·s or less. In the case where the Brookfield viscosity at -40°C exceeds 750 mPa·s, the composition cannot be a lubricating oil composition having the excellent viscosity characteristics due to the deterioration of the low-temperature fluidity, and in the case where the composition is used in an automobile, the ride quality of the vehicle is deteriorated by the generation of an excessive fluid resistance due to the excessively large viscosity.

The Brookfield viscosity at -40°C of the lubricating oil composition of the present embodiment is preferably 730 mPa·s or less, more preferably 710 mPa·s or less, further preferably 700 mPa·s or less, and particularly preferably 680 mPa·s or less, from the standpoint of the further excellent viscosity characteristics provided. The lower limit thereof is not particularly limited, and is generally 400 mPa·s or more. In the description herein, the Brookfield viscosity at -40°C is a value that is measured by the method described in the examples.

The NOACK value at 145°C for 1 hour of the lubricating oil composition of the present embodiment is necessarily 10% by mass or less. In the case where the NOACK value exceeds 10% by mass, the lubricating oil composition of the present embodiment cannot be said to have the property of difficulty in evaporation, and the lubricating oil composition is easily evaporated due to frictional heat generated locally in the shock absorber, so as to cause a problem in safety and to cause damage of the apparatus.

The NOACK value at 145°C for 1 hour of the lubricating oil composition of the present embodiment is preferably 9.8% by mass or less, more preferably 9.5% by mass or less, and further preferably 9.0% by mass or less, from the standpoint of the property of difficulty in evaporation and the safety provided, and the prevention of damage of the apparatus. The lower limit thereof is preferably 4% by mass or more, more preferably 5% by mass or more, and further preferably 5.5% by mass or more, from the standpoint of the reduction of the consumed amount of the lubricating oil composition. In the description herein, the NOACK value is a value that is measured by the method described in the examples.

The flash point of the lubricating oil composition of the present embodiment is preferably 120°C or more, more preferably 130°C or more, further preferably 140°C or more, and still further preferably 145°C or more, and the upper limit thereof is generally 180°C or less. The lubricating oil composition of the present embodiment has a high flash point, which is preferably 140°C or more, and thus can be said to have the property of difficulty in evaporation and high safety, and to be hard to cause damage of the apparatus.

The density of the lubricating oil composition of the present embodiment is preferably 0.860 g/cm$^3$ or less, more preferably 0.850 g/cm$^3$ or less, further preferably 0.840 g/cm$^3$ or less, and particularly preferably 0.830 g/cm$^3$ or less, and is generally 0.800 g/cm$^3$ or more. The lubricating oil composition of the present embodiment that has a density within the range along with the aforementioned properties can have the further excellent viscosity characteristics and can have a high flash point.

[Purpose of Lubricating Oil Composition]

The lubricating oil composition of the present embodiment has the excellent viscosity characteristics, the property of difficulty in evaporation, and the fuel efficiency capability by decreasing the viscosity.

Accordingly, the lubricating oil composition of the present embodiment can be favorably applied to various purposes including a drive system apparatus, such as a shock absorber, a transmission, and a power steering, an engine, a hydraulic system, a turbine, a compressor, a machine tool, a cutting machine, a gear, a fluid dynamic bearing, and a rolling bearing. Among these, in consideration of the characteristics thereof, i.e., the excellent viscosity characteristics, the property of difficulty in evaporation, and the fuel efficiency capability by decreasing the viscosity, the lubricating oil composition is preferably applied to a drive system apparatus, preferably applied to a shock absorber for an automobile, such as a four-wheel vehicle and a two-wheel vehicle, and an earthquake resistant mechanism of housing, and particularly preferably applied to a shock absorber for a four-wheel vehicle.

[Method for producing Lubricating Oil Composition]

The method for producing a lubricating oil composition of the present embodiment includes blending a base oil having a kinematic viscosity at 40°C of 4.0 mm$^2$/s or more and less than 6.0 mm$^2$/s, a kinematic viscosity at 100°C of 1.0 mm$^2$/s or more and less than 2.0 mm$^2$/s and a flash point of 140°C or more, and a viscosity index improver. According to the method for producing a lubricating composition, a lubricating oil composition having a Brookfield viscosity at -40°C of 750 mPa·s or less, a kinematic viscosity at 60°C of 5.5 mm$^2$/s or more, and a NOACK value at 145°C for 1 hour of 10% by mass or less, i.e., the lubricating oil composition of the present embodiment, can be obtained.

The base oil and the viscosity index improver used in the method for producing a lubricating oil composition of the present embodiment are as described above. The resulting lubricating oil composition is also as described above.

The method for producing a lubricating oil composition of the present embodiment preferably includes stirring the composition by a known method after blending the base oil and the viscosity index improver, so as to disperse the viscosity index improver uniformly in the base oil. In the case where the additional additive is used, the additive may be blended simultaneously with the base oil and the viscosity index improver.

[Drive System Apparatus]

The drive system apparatus of the present embodiment uses the aforementioned lubricating oil composition of the present embodiment. Examples of the drive system apparatus include a shock absorber, a transmission, and a power steering, and in consideration of the characteristics of the lubricating oil composition of the present embodiment, i.e., the excellent viscosity characteristics, the property of difficulty in evaporation, and the fuel efficiency capability by decreasing the viscosity, the drive system apparatus is preferably a shock absorber for an automobile, such as a four-wheel vehicle and a two-wheel vehicle, and an earthquake resistant mechanism of housing, more preferably a shock absorber for an automobile, such as a four-wheel vehicle and a two-wheel vehicle, and particularly preferably a shock absorber for a four-wheel vehicle.

Examples

The present invention will be described in more detail with reference to examples below, but the present invention is not limited to the examples. The measurement methods and the evaluation methods for the properties were as follows.

(1) Kinematic Viscosities at 40°C, 60°C, and 100°C, Viscosity Index

These values were measured according to JIS K2283.

(2) Flash Point

The value was measured by the Cleveland open-cup (COC) method according to JIS K2265.

(3) Aromatic Content (%$C_A$), Naphthene Content (%$C_N$), and Paraffin Content (%$C_P$)

These values were measured according to ASTM D-3238 ring analysis (n-d-M method).

(4) Density at 15°C

The value was measured according to JIS K2249.

(5) 10% Distillation Temperature and 90% Distillation Temperature

These values were measured according to JIS K2254.

(6) Aniline Point

The value was measured according to JIS K2256 (U-tube method).

(7) Mass Average Molecular Weight (Mw)

The value was measured according to ASTM D2502.

(8) Temperature Gradient $\Delta|\eta^*|$ of Complex Viscosity between Two Temperature Points of -25°C and -10°C

The value was measured by using a rheometer "Physica MCR 301", produced by Anton Paar GmbH, according to the following procedure.
The base oil to be measured was inserted in a corn plate (diameter: 50 mm, tilt angle: 1°) controlled to a measurement temperature of -25°C or -10°C, and then held at the same temperature for 10 minutes. In this period, care was taken not to give a strain to the inserted solution.
Subsequently, at the measurement temperature of -25°C or -10°C, the complex viscosity $\eta^*$ at -25°C or -10°C was measured in a vibration mode under conditions of an angular velocity of 6.3 rad/s and a strain amount appropriately set in the range of from 0.1 to 100% according to the measurement temperature.
The "temperature gradient $\Delta|\eta^*|$ of complex viscosity" was then calculated from the value of the complex viscosity $\eta^*$ at -25°C or -10°C using the aforementioned calculation expression (f1).

(9) Proportions of Aromatic Component, Naphthene Component, n-Paraffin Component, and Isoparaffin Component

The aromatic content, the naphthene content, and the total paraffin content (i.e., the sum of the n-paraffin content and the isoparaffin content) were determined according to ASTM D2786. Subsequently, the n-paraffin content was determined according to a GC-FID method, and the isoparaffin content was determined from the difference between the total paraffin content and the n-paraffin content.
The proportion of each of the aromatic component, the naphthene component, the n-paraffin component, and the isoparaffin component based on the 100% by volume of the total amount of the components was calculated.

(10) Brookfield Viscosity

The Brookfield viscosity at -40°C was measured according to ASTM D2983-09.

(11) NOACK Value

The value was measured under conditions of 145°C for 1 hour according to ASTM D5800.

The properties of the feed stock oil (I) used in Examples and Comparative Examples are shown in Table 1. The feedstock oil (I) contained a gas oil fraction obtained by hydrocracking of a heavy gas oil.

Table 1

| Gas oil fraction contained | | Feedstock oil (I) |
|---|---|---|
| | | Gas oil fraction obtained by hydrocracking of heavy gas oil |
| Kinematic viscosity at 40°C | mm$^2$/s | 5.170 |
| Kinematic viscosity at 100°C | mm$^2$/s | 1.754 |
| Flash point | °C | 124 |
| Aromatic content (%$C_A$) | - | 4.4 |
| Naphthene content (%$C_N$) | - | 25.9 |
| Paraffin content (%$C_P$) | - | 69.7 |
| Density (15°C) | g/cm$^3$ | 0.8265 |
| 10% Distillation temperature | °C | 278 |
| 90% Distillation temperature | °C | 383 |
| Mass average molecular weight (Mw) | - | 238 |
| Aromatic content | % by volume | 8.4 |
| Naphthene content | % by volume | 46.8 |
| n-Paraffin content | % by volume | 8.8 |
| Isoparaffin content | % by volume | 36.00 |

Producing Example 1 (Production of Base Oil A)

The feedstock oil (I) shown in Table 1 was subjected to a hydrogenation isomerization dewaxing process using a platinum-zeolite catalyst (containing zeolite as a carrier having carried thereon platinum) under conditions of a reaction temperature of 294°C, a hydrogen partial pressure of 4 MPa, a supply ratio of hydrogen and the feedstock oil (hydrogen/feedstock oil) of 422 Nm$^3$/kL, and an LHSV of 1.1 hr$^{-1}$, so as to provide a produced oil (i).

The produced oil (i) having been subjected to the hydrogenation isomerization dewaxing was then subjected to a hydrofinishing process using a nickel/tungsten-alumina catalyst (containing alumina as a carrier having carried thereon nickel and tungsten) under conditions of a reaction temperature of 290°C, a hydrogen partial pressure of 18.5 MPa, a supply ratio of hydrogen and the produced oil (i) (hydrogen/produced oil (i)) of 1,000 Nm$^3$/kL, and an LHSV of 0.6 hr$^{-1}$.

The produced oil having been subjected to the hydrofinishing process was distilled under reduced pressure, and a fraction having a kinematic viscosity at 40°C in a range of from 4.0 to 6.0 mm$^2$/s was collected to provide a base oil (A). The properties of the base oil (A) are shown in Table 2.

Base oils (B) and (C) having the properties shown in Table 2 were prepared.

Table 2

| Kind of base oil | | (A) | (B) | (C) |
|---|---|---|---|---|
| Kinematic viscosity at 40°C | mm$^2$/s | 5.409 | 7.117 | 1.630 |
| Kinematic viscosity at 100°C | mm$^2$/s | 1.793 | 2.170 | 0.796 |

(continued)

| Kind of base oil | | (A) | (B) | (C) |
|---|---|---|---|---|
| Flash point | °C | 156 | 158 | 86 |
| Temperature gradient $\Delta|\eta^*|$ of complex viscosity | Pa·s/°C | 0.0022 | - | - |
| Aniline point | °C | 95.6 | - | - |
| Density (15°C) | g/cm$^3$ | 0.821 | 0.820 | 0.794 |
| Aromatic content (%$C_A$) | - | 1.0 | - | - |
| Naphthene content (%$C_N$) | - | 29.7 | - | - |
| Paraffin content (%$C_P$) | - | 69.3 | - | - |

Examples 1 to 6 and Comparative Example 1

Lubricating oil compositions were prepared according to the blending formulation (% by mass) shown in Table 3. The resulting lubricating oil compositions were evaluated for the properties by measuring the properties thereof and performing the tests. The evaluation results are shown in Table 3.

Table 3

| | | | Example | | | | | | Comparative Example | | |
|---|---|---|---|---|---|---|---|---|---|---|---|
| | | | 1 | 2 | 3 | 4 | 5 | 6 | 1 | 2 | 3 |
| Blending formulation | Base oil (A) | % by mass | 92.00 | 90.00 | 88.00 | 88.00 | 84.00 | 37.00 | - | 78.00 | 100.00 |
| | Base oil (B) | % by mass | - | - | - | - | - | 45.00 | 78.00 | - | - |
| | Base oil (C) | % by mass | - | - | - | - | - | 8.00 | 12.50 | 12.50 | - |
| | Viscosity index improver A | % by mass | 8.00 | 10.00 | 12.00 | - | - | 10.00 | 9.50 | 9.50 | - |
| | Viscosity index improver B | % by mass | - | - | - | 12.00 | 16.00 | - | - | - | - |
| | Total | % by mass | 100.00 | 100.00 | 100.00 | 100.00 | 100.00 | 100.00 | 100.00 | 100.00 | 100.00 |
| Properties and evaluation | Base oil | | | | | | | | | | |
| | Kinematic viscosity at 40°C | mm$^2$/s | 5.410 | 5.410 | 5.410 | 5.410 | 5.410 | 5.344 | 5.426 | 4.375 | 5.409 |
| | Kinematic viscosity at 100°C | mm$^2$/s | 1.793 | 1.793 | 1.793 | 1.793 | 1.793 | 1.785 | 1.808 | 1.555 | 1.793 |
| | Flash point | °C | 156 | 156 | 156 | 156 | 156 | 149 | 118 | 115 | 156 |
| | Lubricating oil composition | | | | | | | | | | |
| | Kinematic viscosity at 40°C | mm$^2$/s | 9.807 | 11.490 | 13.170 | 8.325 | 9.555 | 11.520 | 11.470 | 10.210 | 5.409 |
| | Kinematic viscosity at 60°C | mm$^2$/s | 6.630 | 7.809 | 8.991 | 5.811 | 6.791 | 7.822 | 7.761 | 6.989 | 3.444 |
| | Kinematic viscosity at 100°C | mm$^2$/s | 3.646 | 4.310 | 4.977 | 3.339 | 3.985 | 4.312 | 4.259 | 3.901 | 1.793 |
| | Viscosity index | - | 324 | 353 | 379 | 363 | 417 | 352 | 346 | 352 | - |
| | Flash point | °C | 160 | 158 | 150 | 156 | 156 | 146 | 116 | 114 | 156 |
| | Density (15°C) | g/cm$^3$ | 0.8271 | 0.8287 | 0.8303 | 0.8248 | 0.8249 | 0.8232 | 0.8291 | 0.8288 | 0.821 |
| | Brookfield viscosity | mPa·s | 530 | 580 | 680 | 440 | 500 | 570 | 560 | 520 | - |
| | NOACK value | % by mass | 5.9 | 6.3 | 6.1 | 6.3 | 6.5 | 8.3 | 13.6 | 14.1 | - |

The details of the viscosity index improvers shown in Table 1 used in the examples were as follows.

Viscosity index improver A: polymethacrylate (mass average molecular weight (Mw): 140,000, kinematic viscosity at 100°C: 835 mm$^2$/s, a mixture of a polymethacrylate and a diluent oil, polymethacrylate content: 53.3% by mass, contents of polymethacrylate only in Examples 1, 2, 3, and 6, and Comparative Examples 1 and 2 (% by mass): 4.26, 5.33, 6.40, 5.33, 5.06, and 5.06)

Viscosity index improver B: polymethacrylate (mass average molecular weight (Mw): 200,000, kinematic viscosity at 100°C: 850 mm$^2$/s, a mixture of a polymethacrylate and a diluent oil, polymethacrylate content: 28.0% by mass, contents of polymethacrylate only in Examples 4 and 5 (% by mass): 3.36 and 4.48)

It was confirmed that the lubricating oil compositions of Examples 1 to 6 had excellent viscosity characteristics with a low temperature dependency of the viscosity, a flash point of 140°C or more, and a property of difficulty in evaporation with a NOACK value of 10% by mass or less, and also had low kinematic viscosities at 40°C, 60°C, and 100°C in a well balanced manner. It was also confirmed that the lubricating oil compositions were able to have a fuel efficiency capability by decreasing the viscosity, associated with the excellent viscosity characteristics.

On the other hand, it was confirmed that the lubricating oil compositions of Comparative Examples 1 and 2 using a base oil having a flash point of 140°C or less were suppressed in increase of the viscosity at a low temperature and had low kinematic viscosities at 40°C, 60°C, and 100°C in a well balanced manner, but resulted in low flash points of 116°C and 114°C and large NOACK values of 13.6% by mass and 14.1% by mass, which indicated a property of easiness in evaporation, and thus there were a problem in safety and a possibility of damaging the apparatus. The base oil (A) alone of Comparative Example 3 having no viscosity index improver added had a kinematic viscosity at 60°C of less than 5.5 mm$^2$/s and did not have excellent viscosity characteristics.

Industrial Applicability

The lubricating oil composition of the present embodiment has such features as excellent viscosity characteristics, a property of difficulty in evaporation, and a fuel efficiency capability by decreasing the viscosity, and therefore can be favorably applied to various purposes including a drive system apparatus, such as a shock absorber, a transmission, and a power steering, an engine, a hydraulic system, a turbine, a compressor, a machine tool, a cutting machine, a gear, a fluid dynamic bearing, and a rolling bearing. Among these, the lubricating oil composition is preferably applied to a drive system apparatus, more preferably applied to a shock absorber for an automobile, such as a four-wheel vehicle and a two-wheel vehicle, and an earthquake resistant mechanism of housing, and particularly preferably applied to a shock absorber for a four-wheel vehicle.

**Claims**

1. A lubricating oil composition, comprising a base oil having a kinematic viscosity at 40°C of 4.0 mm$^2$/s or more and less than 6.0 mm$^2$/s, a kinematic viscosity at 100°C of 1.0 mm$^2$/s or more and less than 2.0 mm$^2$/s and a flash point of 140°C or more, and a viscosity index improver; and having a Brookfield viscosity at -40°C of 750 mPa·s or less, a kinematic viscosity at 60°C of 5.5 mm$^2$/s or more, and a NOACK value at 145°C for 1 hour of 10% by mass or less.

2. The lubricating oil composition according to claim 1, wherein the base oil has a kinematic viscosity at 100°C of 1.5 mm$^2$/s or more and less than 2.0 mm$^2$/s.

3. The lubricating oil composition according to claim 1 or 2, wherein the base oil is a mineral oil, and a feedstock oil of the mineral oil contains a gas oil fraction obtained by hydrocracking of a heavy gas oil.

4. The lubricating oil composition according to claim 3, wherein the feedstock oil has a paraffin content (%Cp) of 60 or more.

5. The lubricating oil composition according to claim 3 or 4, wherein the feedstock oil has an aromatic content (%C$_A$) of 10.0 or less.

6. The lubricating oil composition according to claim 3, wherein the feedstock oil has a proportion of a n-paraffin component of 1% by volume or more and 50% by volume or less based on 100% by volume of the total amount of an aromatic component, a naphthene component, a n-paraffin component, and an isoparaffin component.

7. The lubricating oil composition according to any one of claims 3 to 6, wherein the feedstock oil has a 10% distillation temperature of 250°C or more, and a 90% distillation temperature of 320°C or more, as measured by the distillation test according to JIS K2254.

8.   The lubricating oil composition according to any one of claims 3 to 7, wherein the feedstock oil has a kinematic viscosity at 40°C of 4.0 mm$^2$/s or more and 6.0 mm$^2$/s or less, and a kinematic viscosity at 100°C of 1.0 mm$^2$/s or more and 2.0 mm$^2$/s or less.

9.   The lubricating oil composition according to any one of claims 1 to 8, wherein the viscosity index improver is a polymethacrylate.

10.   The lubricating oil composition according to claim 9, wherein the polymethacrylate has a mass average molecular weight of 30,000 or more and 350,000 or less.

11.   The lubricating oil composition according to any one of claims 1 to 10, wherein the content of the viscosity index improver is 2.5% by mass or more and 7.4% by mass or less based on the total amount of the composition.

12.   The lubricating oil composition according to any one of claims 1 to 11, which has a flash point of 120°C or more and 180°C or less.

13.   The lubricating oil composition according to any one of claims 1 to 12, which is to be applied to a drive system apparatus.

14.   The lubricating oil composition according to any one of claims 1 to 13, which is to be applied to a shock absorber for a four-wheel vehicle.

15.   A method for producing a lubricating oil composition having a Brookfield viscosity at -40°C of 750 mPa·s or less, a kinematic viscosity at 60°C of 5.5 mm$^2$/s or more, and a NOACK value at 145°C for 1 hour of 10% by mass or less, comprising blending a base oil having a kinematic viscosity at 40°C of 4.0 mm$^2$/s or more and less than 6.0 mm$^2$/s, a kinematic viscosity at 100°C of 1.0 mm$^2$/s or more and less than 2.0 mm$^2$/s and a flash point of 140°C or more, and a viscosity index improver.

16.   A drive system apparatus comprising the lubricating oil composition according to any one of claims 1 to 12.

17.   The drive system apparatus according to claim 16, which is a shock absorber for a four-wheel vehicle.

## INTERNATIONAL SEARCH REPORT

| | International application No. |
|---|---|
| | PCT/JP2017/041475 |

| A. CLASSIFICATION OF SUBJECT MATTER |
|---|
| Int.Cl. see extra sheet |

According to International Patent Classification (IPC) or to both national classification and IPC

| B. FIELDS SEARCHED |
|---|
| Minimum documentation searched (classification system followed by classification symbols)<br>Int.Cl. C10M171/02, C10M169/04, F16C33/66, C10M101/02, C10M145/14, C10N20/00, C10N20/02, C10N20/04, C10N30/02, C10N40/02, C10N40/04, C10N40/06, C10N40/08, C10N40/12, C10N40/22, C10N40/25, C10N40/30 |

| Documentation searched other than minimum documentation to the extent that such documents are included in the fields searched |
|---|
| Published examined utility model applications of Japan    1922-1996<br>Published unexamined utility model applications of Japan    1971-2018<br>Registered utility model specifications of Japan    1996-2018<br>Published registered utility model applications of Japan    1994-2018 |

| Electronic data base consulted during the international search (name of data base and, where practicable, search terms used) |
|---|
| |

### C. DOCUMENTS CONSIDERED TO BE RELEVANT

| Category* | Citation of document, with indication, where appropriate, of the relevant passages | Relevant to claim No. |
|---|---|---|
| X<br>Y | WO 2015/025973 A1 (IDEMITSU KOSAN CO.) 26 February 2015, claim 1, paragraphs [0003], [0004], [0007], [0012], [0036], [0037]<br>& US 2016/0194578 A1, claim 1, paragraphs [0004], [0005], [0010], [0029], [0073], [0074] | 1-17<br>1-17 |
| Y | JP 9-100480 A (IDEMITSU KOSAN CO.) 15 April 1997, claim 1, paragraphs [0010], [0012]-[0014], [0018]-[0039] (Family: none) | 1-17 |

☒ Further documents are listed in the continuation of Box C.    ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>04 January 2018 | Date of mailing of the international search report<br>16 January 2018 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2017/041475

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2007-51174 A (SK CORP.) 01 March 2007 (Family: none) | 1-17 |
| A | WO 2010/041689 A1 (JX NIPPON OIL AND ENERGY CORPORATION) 05 April 2010 & US 2011/0237477 A1 | 1-17 |
| A | JP 2006-219642 A (COSMO SEKIYU LUBRICANTS KK) 24 August 2006 (Family: none) | 1-17 |

Form PCT/ISA/210 (continuation of second sheet) (January 2015)

**INTERNATIONAL SEARCH REPORT**

International application No.

PCT/JP2017/041475

(Continuation of Box No. A)
CLASSIFICATION OF SUBJECT MATTER

C10M171/02(2006.01)i, C10M169/04(2006.01)i, F16C33/66(2006.01)i,
C10M101/02(2006.01)n, C10M145/14(2006.01)n, C10N20/00(2006.01)n,
C10N20/02(2006.01)n, C10N20/04(2006.01)n, C10N30/02(2006.01)n,
C10N40/02(2006.01)n, C10N40/04(2006.01)n, C10N40/06(2006.01)n,
C10N40/08(2006.01)n, C10N40/12(2006.01)n, C10N40/22(2006.01)n,
C10N40/25(2006.01)n, C10N40/30(2006.01)n

Form PCT/ISA/210 (extra sheet) (January 2015)

**EP 3 486 302 A1**

## REFERENCES CITED IN THE DESCRIPTION

**Patent documents cited in the description**

- JP 2005314609 A
- JP 2004182931 A